# EUROPEAN PATENT SPECIFICATION

(11) **EP 0 809 208 B1**
(45) Date of publication and mention of the grant of the patent: **28.07.2004**
(21) Application number: 97108326.6
(22) Date of filing: 22.05.1997
(51) Int. Cl.: G06K 17/00, B41J 13/00

(54) **Method and device for printing on a medium and for detecting and reading information recorded on the medium**
Verfahren und Vorrichtung zum Bedrucken eines Trägers und zum Erfassen und Lesen der auf dem Träger gedruckten Informationen
Méthode et dispositif d'impression sur un support, détection et lecture de l'information enregistrée sur le support

(30) Priority: 22.05.1996 JP 12753796
(43) Date of publication of application: 26.11.1997
(73) Proprietor: SEIKO EPSON CORPORATION, Tokyo 163 (JP)
(72) Inventor: Momose, Tsutomu, Suwa-shi, Nagano-ken 392 (JP)
(74) Representative: Hoffmann, Eckart, Dipl.-Ing.

(56) References cited:
- EP-A- 0 398 515
- EP-A- 0 437 724
- US-A- 4 196 846
- PATENT ABSTRACTS OF JAPAN vol. 016, no. 203 (M-1247), 14 May 1992 & JP 04 031067 A (TAMURA ELECTRIC WORKS LTD;OTHERS: 01), 3 February 1992

## Description

The invention relates to detecting and reading information recorded on media and for processing the media, and relates particularly to a device and method for reading information recorded with magnetic ink on media such as checks and negotiable instruments, and for printing information such as endorsement information on the media.

Checks are widely used to pay for shopping purchases, utility bills, and other business or personal transactions. In general the amount and signature of the account holder are written on the face of the check together with other information such as a financial institution tracking code and the check serial number. The tracking code and check serial number are normally printed in a standardized location and in a standardized format using MICR (Magnetic Ink Character Recognition) text.

The magnetic ink used to print MICR text can be detected and read using a sensor such as a magnetic read head, and MICR readers have been developed for reading the MICR text and extracting the printed information. When a check or negotiable instrument is received, the operator passes the check or instrument through an MICR reader to detect the magnetic ink, read the information, and determine the validity of the information. A printing device is then used to endorse the back of the check by printing an approval code, store or business name, and other required information.

EP-A-0 707 971 discloses a printing device according to the precharacterizing part of claim 1, which simplifies this sequence of operations and sequentially reads MICR text and prints endorsement information using a magnetic read head and a print head disposed along a single paper-transport path. This type of device is widely used because it enables checks to be processed without using separate reading and printing devices.

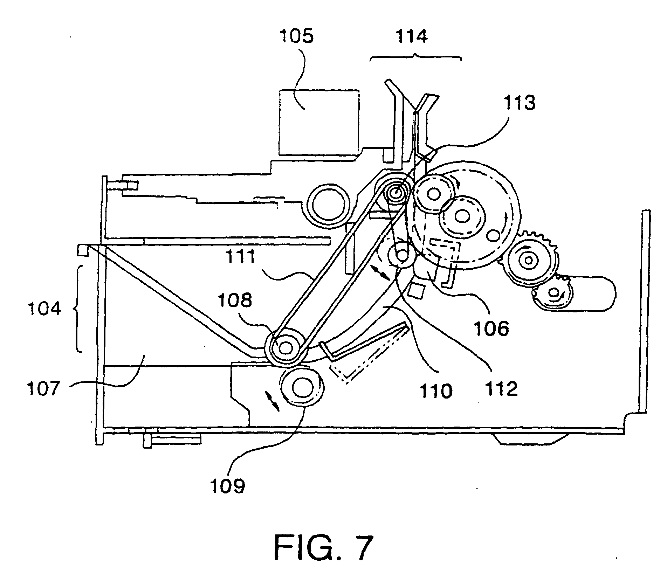

As shown in FIG. 7 this device comprises a print head 105, a magnetic read head 106, and a space 104 at the front of the device which provides an opening 107 into which a check may be inserted. The check is inserted horizontally into opening 107. Transport roller 108 is disposed between opening 107 and paper transport path 110. When the leading edge of the check inserted into opening 107 reaches the bottom of transport roller 108, presser roller 109 lifts to press the check against transport roller 108. A drive mechanism not shown in the figure then rotates transport roller 108 to move the check into paper transport path 110. Magnetic read head 106 is disposed on the back side of paper transport path 110. Transport roller 112, which is driven by belt 111 to rotate in synchronization with transport roller 108, is disposed on the other side of paper transport path 110 opposite to magnetic read head 106 such that the check passes between them. When the leading edge of the check reaches magnetic read head 106, transport roller 112 is moved to press the check against magnetic read head 106 and to continue transporting the check through the paper transport path 110. Magnetic read head 106 detects and reads the magnetic ink printed on the check. Paper transport path 110 curves gently upward with print head 105 disposed at the top end of the path. Another transport roller 113, which rotates in synchronization with transport roller 108, presser roller 109 and transport roller 112, is disposed between print head 105 and magnetic read head 106. After the check is transported by presser roller 109 and transport roller 112 through the paper transport path 110 and is read by magnetic read head 106, it is transported further by transport roller 113. After the entire check is advanced to a vertical position, specific information is printed by the print head 105, and the check is then ejected from opening 114 at the top of the device to complete check processing.

Because transport rollers 108, 112 and 113 rotate synchronously with one another, however, no or no sufficient tension is applied by the transport rollers to stretch and straighten the check. As a result, transport roller 112 must apply considerable pressure to the check to assure positive contact against magnetic read head 106 when the check is wrinkled or creased. Because of the high pressure required, the device tends to be larger and more expensive to manufacture due to the measures that must be taken to assure sufficient durability in the bearings of transport roller 112 and the detection surface of magnetic read head 106. Furthermore, a device of this type is inconvenient to use because an operator's eyes and hands must travel back and forth between space 104 at the front of the device and opening 114 at the top of the device.

EP-A-0 707 971 also describes using two pressure pads instead of the pressure roller, the pressure pads being spaced apart in the direction perpendicular to the transport direction. Like the pressure roller the pressure pads are movable between a first and a second position. In one position the pressure pads contact the check with one of them pressing the check against the magnetic read head. In the other position both pressure pads are moved away from the check.

EP-A-0 437 724 discloses a printing device for printing on a medium and for reading information recorded on a first surface of the medium that comprises: a transport path having an insertion opening (6) for receiving and discharging a medium; a printing mechanism composed of a printing head and a platen roller for printing on said medium), a magnetic sensor for sensing and reading said information recorded on said medium; a first transportation mechanism having a first and a second condition and being adapted, in said first condition, to apply motive force to said medium for moving said medium in a first direction from said insertion opening toward said reading mechanism and said printing mechanism, and, in said second condition, to apply motive force to said medium for moving said medium in a second direction opposite to the first direction; holding means switchable between a first state for holding printing head against said platen roller and a second state in which printing head is disengaged from said platen roller; and a switching mechanism for switching said holding means between said first and second states. In addition to said first transportation mechanism this prior art comprises second and third transportation mechanisms, the first transportation mechanisms being disposed next to the insertion opening, the second being disposed at the position of the magnetic sensor and the third one being disposed on the side of the printing head opposite to the second transportation mechanism. As in the case of EP-A-0 707 971 all transportation mechanisms and the platen roller are synchronized. Hence, no substantial tension is applied to the medium in the transportation direction, even not when the printing head is pressed against the platen roller.

JP-U-1 116 968 discloses a magnetic head protection device for a magnetic card reader having a write/read mechanism comprising a magnetic read head and a pinch roller. In a closed condition of the write/read mechanism the magnetic read head is pressed against the pinch roller while it is lifted away from the pinch roller in an open position. The magnetic card is inserted through an insertion opening into a straight transport path defined by a first transportation mechanism, the write/read mechanism and a second transportation mechanism arranged in this order between the insertion opening and a card stopper. A magnetic card inserted into the insertion opening is first transported in a forward direction past the closed write/read mechanism and the information recorded on a magnetic stripe is read. The write/read mechanism is then opened and the magnetic card returned towards the insertion opening. With the write/read closed again the magnetic card is then transported in the forward direction while information is being written into the magnetic stripe. Finally, the write/read mechanism is opened and the magnetic card transported to and discharged through the insertion opening.

The object of the present invention is to provide a compact, low-cost device for processing checks and other media which is more convenient to operate than prior art devices, and to provide a processing method therefor.

These objects are achieved by a device as set forth in claim 1 and a method as set forth in claim 11. Preferred embodiments of the invention are set forth in the dependent claims.

To achieve these objects, a device according to the present invention receives an information-recording medium such as a check through an opening, moves the medium along a transport path in one direction (forward) until at least part of the medium passes a sensor such as a magnetic read head, moves the medium along the transport path in the opposite direction (backward), and subsequently ejects the medium through the opening at which the medium was received. The sensor detects and reads information recorded on the medium as the medium is moved in the backward direction past the sensor. Tension is applied to the medium as it is pulled in the backward direction past the sensor to stretch and straighten the medium as necessary, thereby achieving good contact with the sensor without requiring excessive force to press the medium against the sensor. Other information is printed onto the medium after the recorded information is detected and read but before the medium is ejected through the opening.

The same transportation mechanism can be used for first pushing the medium into the transport path with no tension being applied to the medium, then pulling the medium back with tension being applied while reading the information recorded on the medium, and finally printing on the medium while still pulling it back toward the insertion opening.

In this manner, the present invention provides for a more compact, lower-cost device which is able to print information onto the medium according to the recorded information that is read from the medium, thereby performing a process with multiple steps, such as check validation and endorsement printing dependent upon the validation result, in response to simplified operator actions that are more convenient to perform than is possible with prior art devices.

With reference to the accompanying drawings, the description below describes embodiments of devices according to the present invention which read MICR text recorded on a medium such as a check and print endorsement information on that medium; however, the present invention may be practiced in other types of devices and in other applications.
- FIG. 1: is a side view of one embodiment of a device according to the present invention for processing checks.
- FIG. 2: is a plan view of the device shown in FIG. 1.
- FIG. 3: is a schematic illustration of various components disposed along a paper transport path in the device shown in FIG. 1.
- FIG. 4: illustrates the relative positions of certain components in the device shown in FIG. 1.
- FIG. 5: is a schematic illustration of various components disposed along a paper transport path in a second embodiment of a device according to the present invention.
- FIG. 6: illustrates the relative positions of certain components in the device shown in FIG. 5.
- FIG. 7: is a simplified side view of a conventional device according to the prior art.

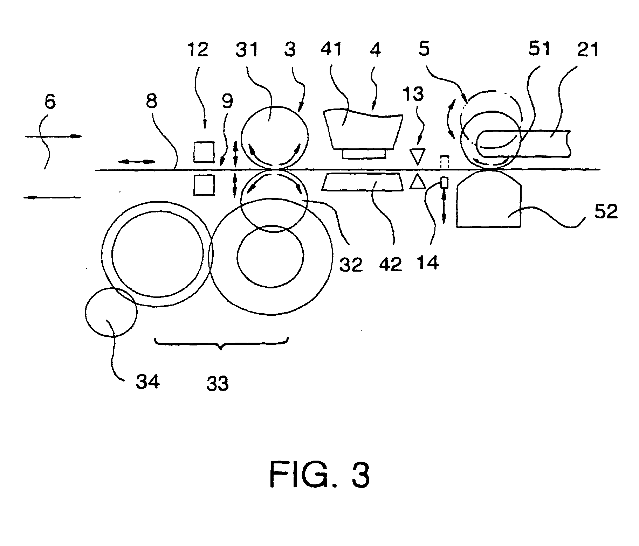

FIG. 3 is a schematic illustration of the major operating components of a device according to the present invention. As shown in FIG. 3, this device comprises insertion opening 6 leading to transport path 9, along one side of which are disposed paper transport roller 31, print head 41, and presser roller 51. Paper transport roller 32, platen 42, and magnetic read head 52 are disposed along the other side of transport path 9 to oppose paper transport roller 31, print head 41, and presser roller 51, respectively. Paper transport roller 31 and paper transport roller 32 constitute transportation mechanism 3, print head 41 and platen 42 constitute printing mechanism 4, and presser roller 51 and magnetic read head 52 constitute reading mechanism 5. Paper transport rollers 31 and 32 and presser roller 51 are arranged to move toward and away from transport path 9. In the orientation shown in Fig. 3, these components are arranged to move vertically.

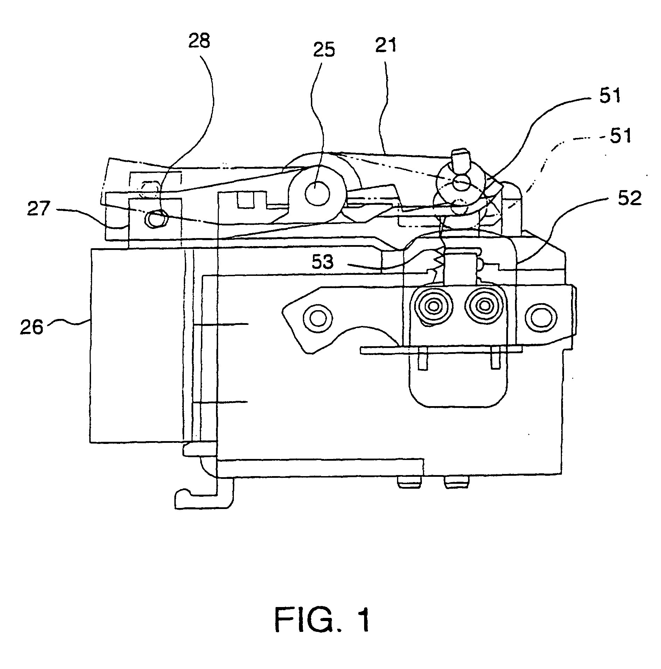

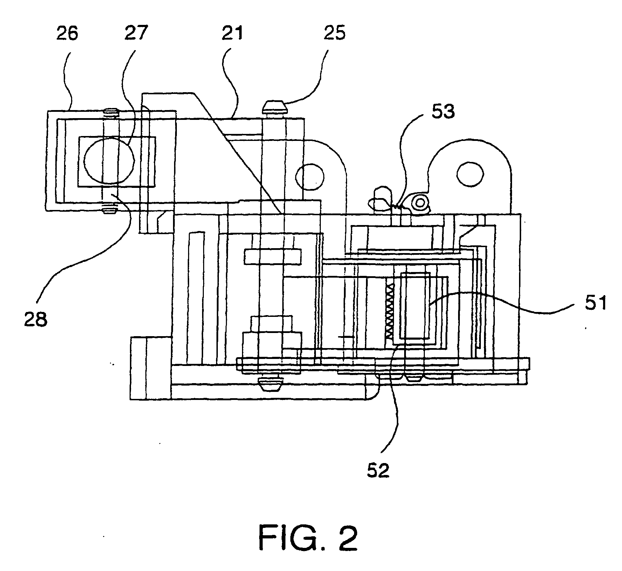

Presser roller 51 and magnetic read head 52, and the part of transport path 9 formed thereby, are preferably formed as a single unit. A side view of this unit is shown in FIG. 1 and a plan view is shown in FIG. 2. Presser roller 51 is mounted on one end of arm 21, the other end of which is connected to plunger 27 by means of shaft 28. The middle of arm 21 is supported by shaft 25 such that when current is supplied to a solenoid contained in housing 26, the resulting motion of plunger 27 causes presser roller 51 to either contact or separate from magnetic read head 52.

Preferably the solenoid housed in housing 26 is a self-hold solenoid that drives plunger 27 in either of two directions depending upon the direction of current flow. The solenoid uses a built-in magnet to hold plunger 27 in either of two corresponding positions, "pull" or "push," when the current is interrupted. After the solenoid pulls the plunger and current is interrupted, the plunger is attracted and held in the pull position by the magnet built in the solenoid. After the solenoid pushes the plunger and current is interrupted, the plunger is held in the push position by a spring at a position separated from the magnet. The plunger moves between these two positions depending upon the direction of current flow.

More specifically, the magnetic field produced by current flowing through the solenoid in a particular direction pulls the plunger from the push position to the pull position. When the current is interrupted, the magnet attracts and holds the plunger in the pull position against the spring force tending to pull the plunger into the push position. When the flow of current in the sofenoid is ceversed, the magnetic field works in the opposite direction to push the plunger from the pull position to the push position. When the current is interrupted, the spring holds the plunger in the push position.

In the embodiment shown in Figs. 1 through 3, roller 51 is separated from magnetic read head 52 when the plunger 27 is in the pull position, and roller 51 presses against magnetic read head 52 when plunger 27 is in the push position.

Although a magnetic-latching type solenoid is described in this embodiment, other types of solenoids such as a leaf spring type solenoid can be used. Furthermore, although a helical spring is described for presser spring 53, other types of elastic members including leaf springs and torsion coil springs can be used.

The operating sequence of the components illustrated in FIG. 3 will now be described.

At the start of the MICR code reading and endorsement printing sequence described here, paper transport roller 31 and paper transport roller 32 are separated and transport path 9 in transportation mechanism 3 is open (note that separating rollers 31 and 32 is not absolutely necessary; alternatively, these rollers may be kept together and activated upon detection of check insertion to draw the check into the transport path). Presser roller 51 is also separated from magnetic read head 52 and transport path 9 in reading mechanism 5 is open. In response to a signal received from a host device not illustrated, current is supplied to the solenoid described above, thereby applying a pulling force to plunger 27 and ensuring that plunger 27 is in the pull position and that presser roller 51 is in an open position. In embodiments using a self-hold solenoid, presser roller 51 is normally in this open position; therefore, even if some external force has overcome the magnetic force that is supposed to hold plunger 27 in the pull position, this operation confirms that presser roller 51 is actually in the open position before operation continues. When this operation is completed the operator is notified by means of a light, for example, that the device is ready for use.

Alternatively, a photo interrupter or other common detector can be mounted on an end of arm 21 to detect whether plunger 27 is in the pull position. If it is already in the pull position, the operation described above can be skipped because the path between presser roller 51 and magnetic read head 52 is already open.

When transport path 9 in reading mechanism 5 is open and presser roller 51 is raised, a form stop 14 between printing mechanism 4 and reading mechanism 5 is moved to the position shown by a dotted line in FIG. 3 to block transport path 9. When check 8 is inserted through insertion opening 6, the leading edge of check 8 contacts form stop 14 which places the check in the proper position in transport path 9.

Paper detector 12 disposed between insertion opening 6 and transportation mechanism 3 detects the presence of check 8. A similar paper detector 13 is also disposed between printing mechanism 4 and form stop 14. When both paper detector 12 and paper detector 13 detect that a check has been inserted into transport path 9, paper transport rollers 31 and 32 are brought together and form stop 14 is retracted from transport path 9. The operation of paper transport rollers 31 and 32 and form stop 14 can be achieved using various known mechanisms such as a plunger and linkage. In this embodiment, a control circuit (not shown in the figures) includes a counter which is reset at this time. This control circuit, which controls stepping motor 34 for paper transport, uses the counter as an indication of check position by incrementing or decrementing the counter according to the direction and amount of stepping motor 34 rotation.

Stepping motor 34 drives paper transport rollers 31 and 32 via speed reducer 33, thereby transporting check 8 through transport path 9 into reading mechanism 5. After paper detector 12 detects the trailing end of the check, transportation mechanism 3 advances check 8 a known distance so that the check does not leave transportation mechanism 3. The paper transport rollers 31 and 32 are stopped and the solenoid discussed above is activated to push plunger 27 into the push position. As a result, arm 21 is operated so that presser roller 51 presses check 8 against magnetic read head 52. Because the solenoid is a self-hold solenoid, the flow of current through the solenoid can be interrupted once check 8 is pressed against magnetic read head 52. This arrangement makes it possible to suppress magnetic noise that would otherwise be generated by the current flowing in the solenoid and carrying noise components generated in the current supply and/or other electric parts of the device.

Note that check 8 is inserted face down so that the side on which the magnetic ink is printed contacts magnetic read head 52.

Paper transport rollers 31 and 32 are now driven in the opposite direction so that check 8 is transported in the reverse direction toward insertion opening 6 as presser roller 51 presses the check against magnetic read head 52. Friction resulting from this pressure, in combination with the drive force of paper transport rollers 31 and 32, applies tension to check 8 to straighten wrinkles or folds, thereby making it easier to assure good contact between check 8 and magnetic read head 52.

Tension can be applied to the check in various ways, including substituting a sliding presser for presser roller 51 to provide sliding friction between the presser and the check or using a damper to provide viscous drag on the presser roller 51 bearing. Additional embodiments of mechanisms to apply tension, referred to herein as tension mechanisms, are discussed below.

These various embodiments of tension mechanisms can be adapted to increase the amount of tension applied to the check. In these cases the position of shaft 25, which functions as the fulcrum of arm 21, is preferably moved away from the end applying pressure to magnetic read head 52. By moving the fulcrum toward this end, the load of the presser roller 51 bearing acting on arm 21 in the direction increasing the pressure of presser roller 51 applied against magnetic read head 52 can be increased.

Preferably, when paper transport first begins to move check 8 in the direction toward insertion opening 6, a blank area of the check containing no magnetic ink characters passes by magnetic read head 52. The signal obtained from magnetic read head 52 while this blank area passes the head can be used to measure the background level of magnetic noise affecting MICR reading.

This first measured background magnetic noise signal level can be stored for subsequent use, as discussed below.

As paper transport rollers 31 and 32 continue to move check 8 in the direction toward insertion opening 6, the area on the check in which magnetic ink is printed passes over magnetic read head 52 and magnetic read head 52 generates a magnetic ink detection signal. This signal is converted into a digital signal by an analog-to-digital converter (ADC), not shown in the figures, and the resultant digital signal is stored in memory, also not shown in the figures.

The digital form of the magnetic ink detection signal is stored in memory as check 8 is transported past magnetic read head 52. Preferably, the check is transported past the read head at a particular speed well suited for detecting and reading magnetic ink. After the trailing edge of check 8, which is the edge farther from insertion opening 6, passes magnetic read head 52, magnetic read head 52 generates a second measured background magnetic noise level signal. The average of this second measured background magnetic noise level signal and the first measured background magnetic noise level signal is used to derive a background noise level which can be used to cancel noise in the magnetic ink detection signal. This process can be accomplished by a microprocessor or other known signal processing device using the ADC and memory mentioned above. Additional details concerning how this may be done are disclosed more fully in the European patent application 97105956.3, published as EP-A-801 356.

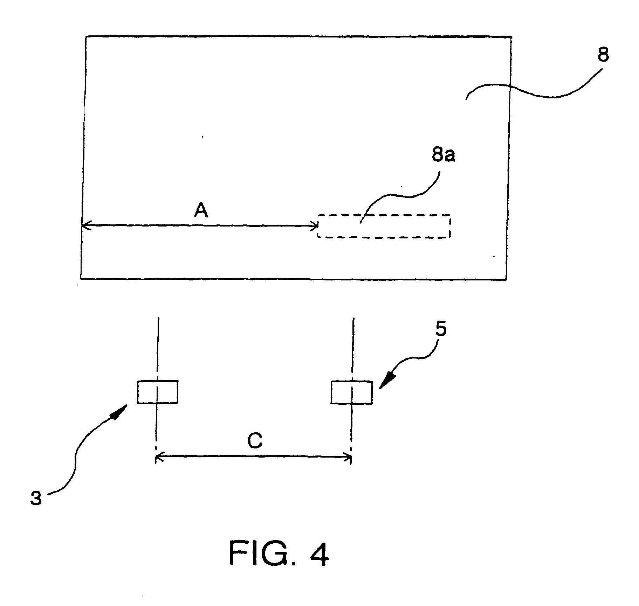

Fig. 4 illustrates the relative position of the components which are used to carry out the process discussed above. When check 8 is moved forward into reading mechanism 5, the forward motion of the check is stopped at a position where the check continues to be held by transportation mechanism 3. The information printed on check 8 with magnetic ink is read as the check is moved in the reverse direction toward insertion opening 6, as described above. As a result, gap C between paper transport rollers 31 and 32 and reading mechanism 5 must be less than distance A between the trailing edge of check 8 and area 8a in which the magnetic ink is printed.

As discussed above for preferred embodiments, a signal generated by magnetic read head 52 before the leading edge of check 8 passes magnetic read head 52 is used to obtain a first measured background magnetic noise signal level. As a result, it is necessary in these embodiments to determine the time at which the leading edge of check 8 passes magnetic read head 52. The time of passage of the leading edge of check 8 over magnetic read head 52 can be estimated from the distance between form stop 14 and magnetic read head 52 and the distance of check travel as provided by the counter mentioned above. In addition, these two distances can be used to estimate the time at which the magnetic ink printed on check 8 has passed magnetic read head 52 as the check is moved in the reverse direction toward insertion opening 6.

After the magnetic ink printed on check 8 has passed magnetic read head 52 as the check is transported in the reverse direction, MICR detection data representing the information printed with magnetic ink is obtained by subtracting the derived background noise level from the signal generated by magnetic read head 52 while reading the magnetic ink. This MICR detection data is then used to recover the MICR code represented by the magnetic ink by means of a known method, and the MICR code is then sent to a host device not shown in the figures. The host device can then reference the bank servicing the account on which the check is drawn to determine check validity, and then send the validation results to the device for subsequent processing.

If the validity of check 8 is confirmed, the device operates paper transport rollers 31 and 32 to move check 8 toward insertion opening 6 while printing endorsement information using printing mechanism 4. When the printing process is completed, the check is ejected from the device through insertion opening 6 to finish the check processing sequence combining MICR code reading and endorsement printing.

Depending upon the position where endorsement printing is started, it may be necessary to transport check 8 in the forward direction toward reading mechanism 5 before or during the printing process. In one embodiment, check 8 is moved forward far enough to bring the appropriate position of check 8 under print head 4, then printing commences as check 8 is moved in the reverse direction toward insertion opening 6. In another embodiment, printing commences as check 8 is moved in the forward direction. In this embodiment, each line of endorsement information would be printed in reverse order; the last line would be printed first and the first line would be printed last. In either embodiment, the solenoid is driven to release pressure of presser roller 51 on the check before check 8 is moved in the forward direction and, after printing is completed, the check is moved in the reverse direction and ejected through insertion opening 6. The first embodiment is generally preferred, however, because presser roller 51 can be pressed against check 8 as printing is performed, thereby improving print quality by applying tension to the check to straighten wrinkles as the check passes through the transport path inside printing mechanism 4. The pressure from presser roller 51 is preferably released after printing is completed. If presser roller 51 were released during printing, the resulting change in load on paper transport rollers 31 and 32 could change the printing position and distort the print image.

If the validity of check 8 is not confirmed, the printing process is not executed and the check is returned to the position when it was first inserted. The MICR code reading process is repeated and the host repeats the request for validation. If validation of the check fails again, check 8 is ejected through insertion opening 6 without printing an endorsement, an invalid-check indication can be provided to the operator, and the MICR code reading and endorsement process ends.

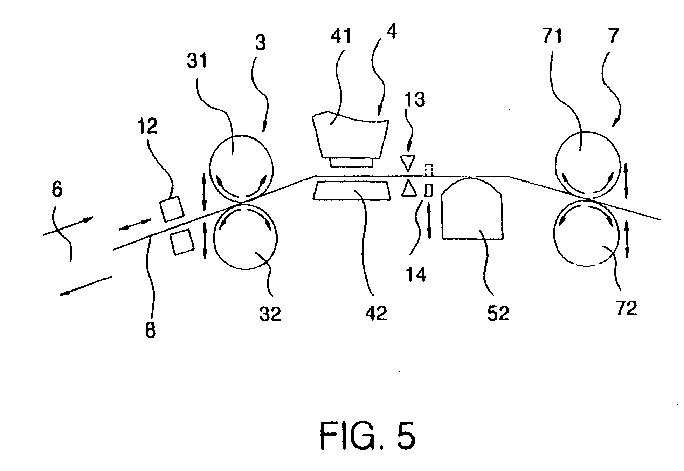

An alternative embodiment illustrated in FIG. 5 will now be described. As shown in FIG. 5, a device for MICR code reading and endorsement printing comprises instead of a presser member (presser roller 51 or sliding presser) a slide mechanism 7 having opposing slide rollers 71 and 72 which can move apart from one another. It is to be noted that in this embodiment a presser roller (or sliding presser) is not or not necessarily part of the reading mechanism. Slide mechanism 7 and transportation mechanism 3 are disposed at a position behind the front surfaces of platen 42 and magnetic read head 52. At the start of the MICR code reading and endorsement printing sequence described here, paper transport rollers 31 and 32 are separated and slide rollers 71 and 72 are separated. In the embodiment using presser roller 51, the paper transport path 9 is preferably straight or substantially straight. A mechanism same or similar to the one described for the preceding embodiments may be used to separate or bring together rollers 71 and 72 and also rollers 31, 32. In the present embodiment the insertion path may be straight when the paper transport rollers 31 and 32 are separated and slide rollers 71 and 72 are separated to facilitate insertion of a check. Once these rollers are brought together the transport path is no longer exactly straight.

The insertion and forward movement of a check is similar to that described above. When paper detectors 12 and 13 detect that a check has been inserted, the check is held and transported by paper transport rollers 31 and 32. When paper detector 12 detects the passage of the trailing end of the check, the check is advanced a known distance such that the check does not leave transportation mechanism 3. The paper transport rollers 31 and 32 are then stopped and the check is clamped by bringing slide rollers 71 and 72 together.

When the check is subsequently transported in the reverse direction toward insertion opening 6, tension is applied to the check by the combination of the friction from slide rollers 71 and 72 and the drive force from paper transport rollers 31 and 32. Because paper transport rollers 31 and 32 and slide rollers 71 and 72 are positioned behind magnetic read head 52, good contact between the check and magnetic read head 52 can be maintained. In this manner, this embodiment achieves the same effects as the embodiments described above in connection with FIG. 3..

A second transportation mechanism similar to transportation mechanism 3 can be substituted for slide rollers 71 and 72. In this case the transportation speed of the second transportation mechanism is set to be slower than the transportation speed of transportation mechanism 3, thereby creating a speed differential that applies tension to the check and achieves the same effects as the embodiments described above.

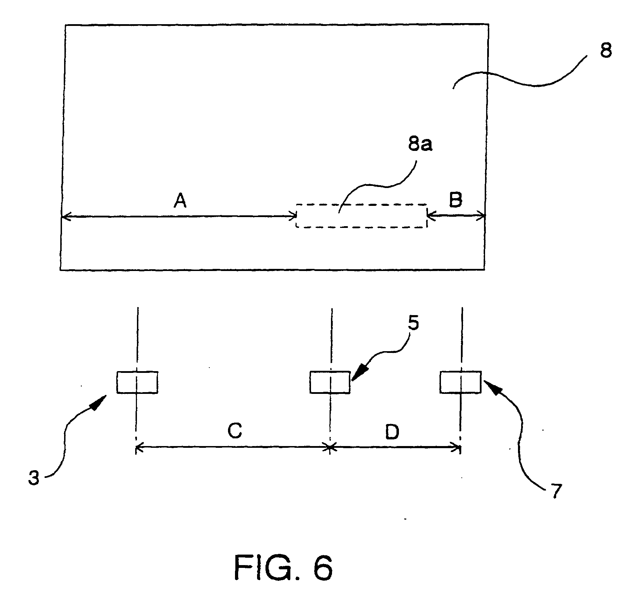

FIG. 6 illustrates restrictions on the relative placement of components in the embodiments just discussed that must be imposed in addition to the restrictions discussed above in connection with FIG. 4. In embodiments such as the one illustrated in FIG. 5, distance D between magnetic read head 52 and slide rollers 71 and 72 (or, alternatively, the paper transport rollers of a second transportation mechanism) must be less than distance B between the leading or insertion edge of check 8 and area 8a in which the magnetic ink information is printed.

It should be understood that while the present invention has been described in connection with the processing of a check for MICR code reading and endorsement printing, the invention is not so limited. Any device for reading information recorded on a medium and for printing onto the medium according to the content of that information is within the scope of the present invention.

Furthermore, the recorded information is not limited to information recorded using magnetic ink but can be any type of information which can be detected using a contact type sensor including optical sensors such as a contact image sensor. For example, the present invention can also be applied in a device for reading bar code information using a presser roller and a reflection type bar code reader.

## Claims

1. A printing device for printing on a medium and for reading information recorded on a first surface of the medium, comprising:
a transport path (9) having an insertion opening (6) for receiving a medium (8),
a printing mechanism (4) for printing on said medium (8),
a reading mechanism (5) comprising a sensor (52) for sensing and reading said information recorded on said medium (8),
a first transportation mechanism (3) having a first and a second condition and being adapted, in said first condition, to apply motive force to said medium (8) for moving said medium in a first direction from said insertion opening toward and past said reading mechanism (5) and said printing mechanism (4), and, in said second condition, to apply motive force to said medium (8) for moving said medium in a second direction opposite to the first direction,
holding means (51; 7) switchable between a first state for holding said medium against said sensor (52) and a second state in which the holding means is disengaged from said medium, and
a switching mechanism (21, 26, 27) for switching said holding means between said first and second states,
**characterized in that**
said insertion opening (6) also forms a discharge opening for discharging said medium after it has been processed in the apparatus, and
said switching mechanism (21, 26, 27) is adapted to switch said holding means into said second state when said first transportation mechanism is in said first condition, and to said first state when said first transportation mechanism is in said second condition and moves said medium past said sensor, said first transportation mechanism in its second condition and said holding means in its first state cooperating to apply tension to said medium (8).

2. The device according to claim 1 wherein said insertion opening (6), said first transportation mechanism (3), said printing mechanism (4) and said sensor (52) are arranged in this order along said transport path (9).

3. The device according to claim 1 or 2 wherein said switching mechanism (21, 26, 27) is adapted to switch said holding means (51; 7) into said first state when said first transportation mechanism (3) is in its second condition and moves said medium past said printing mechanism for printing.

4. The device according to any one of the preceding claims wherein said sensor (52) is a magnetic read head capable of reading said information printed in magnetic ink.

5. The device according to any one of the preceding claims wherein said transport path (9) is substantially straight.

6. The device according to any one of the preceding claims wherein said holding means comprises a presser roller (51) movable between a first and a second position corresponding to said first and second states, respectively, said presser roller in its first position adapted to press said medium against said sensor (52) and to apply a drag force to said medium (8) as said first transportation mechanism moves said medium.

7. The device according to any one of claims 1 to 5 wherein said holding means comprises a sliding presser movable between a first and a second position corresponding to said first and second states, respectively, said sliding presser in its first position adapted to press said medium against said sensor (52) and to apply said tension by dragging on a surface of said medium as said first transportation mechanism moves said medium.

8. The device according to any one of claims 1 to 4 wherein said holding means (7) comprises a pair of rollers (71, 72) arranged at a position of said transport path (9) opposite to that of said first transportation mechanism with respect to said sensor (52) and movable between a first and a second position corresponding to said first and second states, respectively, said rollers in their first position adapted to apply a drag force to said medium (8) so as to apply said tension and to pull said medium against said sensor (52) as said first transportation mechanism moves said medium.

9. The device according to any one of claims 1 to 4 wherein said tension mechanism (7) comprises a second transportation mechanism (71, 72) arranged at a position of said transport path (9) opposite to that of said first transportation mechanism with respect to said sensor (52) and configured when in said first state to apply a motive force to said medium which differs from the motive force applied to said medium by said first transportation mechanism (3) so as to apply said tension and to pull said medium against said sensor (52).

10. The device according to any one of the preceding claims wherein said switching mechanism comprises a self-hold solenoid (26, 27) capable of latching itself in each of two positions corresponding to said two states of said tension mechanism (51; 7).

11. A method for reading information recorded on a first surface of a medium (8) and for printing on said medium, said method comprising:
(a) inserting a medium (8) into an opening (6) of a transport path (9),
(b) detecting the presence of said medium (8) inserted in step (a) and, in response thereto, moving said medium in a forward direction along said transport path past a printing mechanism (4) and a reading mechanism comprising a sensor (52) for sensing and reading said information recorded on said medium (8),
(c) stopping the movement of said medium (8) when said medium reaches a given position with respect to said sensor (52),
(d) engaging said medium with a holding means (51; 7) and moving said medium along said transport path in a reverse direction opposite to said forward direction, wherein said holding means and said transport mechanism cooperate to apply tension to said medium and to force said first surface of said medium against said sensor as said medium is moved past said sensor,
(e) reading said information as said medium is moved in said reverse direction past said sensor (52),
(f) printing on said medium as said medium is moved in said reverse direction past said printing mechanism (4), and
(g) discharging said medium through said opening (6).

12. The method according to claim 11 further comprising a prepatory step prior to step (a) for determining whether said holding means is engaged and, if so, causing said holding means to disengage.

13. The method according to claim 11 or 12 wherein step (e) derives background noise from one or more signals received from said sensor, and uses said background noise to cancel effects of noise in other signals generated by said sensor in response to said information recorded on said medium.

14. A method according to any one of claims 11 through 13 wherein step (f) comprises receiving a signal representing a validation of said information recorded on said medium and, in response thereto, printing information on a second surface of said medium opposite to said first surface.

## Patentansprüche

1. Druckvorrichtung zum Drucken auf einem Träger und zum Lesen von auf einer ersten Oberfläche des Trägers aufgezeichneten Informationen, aufweisend:
einen Transportweg (9) mit einer Einführöffnung (6) zur Aufnahme eines Trägers (8);
einen Druckmechanismus (4) zum Bedrucken dieses Trägers (8);
einen Lesemechanismus (5) mit einem Sensor (52) zum Erfassen und Lesen der auf dem Träger (8) aufgezeichneten Informationen;
einen ersten Transportmechanismus (3) mit einem ersten und einem zweiten Zustand, der so ausgeführt ist, dass er im ersten Zustand eine Bewegungskraft auf den Träger (8) ausübt, um diesen Träger in einer ersten Richtung von der Einführöffnung zum Lesemechanismus (5) und zum Druckmechanismus (4) und an diesen vorbei zu bewegen, und im zweiten Zustand eine Bewegungskraft auf den Träger (8) ausübt, um diesen in einer zweiten zur ersten Richtung entgegengesetzten Richtung zu bewegen;
ein Haltemittel (51; 7), das zwischen einem ersten Zustand zum Halten des Trägers gegen den Sensor (52) und einem zweiten Zustand, in dem das Haltemittel außer Eingriff mit dem Träger ist, umgeschaltet werden kann; und
einen Schaltmechanismus (21, 26, 27) zum Umschalten des Haltemittels zwischen dem ersten und zweiten Zustand,
**dadurch gekennzeichnet, dass**
die Einführöffnung (6) auch eine Ausgabeöffnung zum Ausgeben des Trägers nach seiner Verarbeitung in der Vorrichtung bildet; und
der Schaltmechanismus (21, 26, 27) so ausgeführt ist, dass er das Haltemittel in den zweiten Zustand schaltet, wenn sich der erste Transportmechanismus im ersten Zustand befindet, und in den ersten Zustand, wenn sich der erste Transportmechanismus im zweiten Zustand befindet, und den Träger am Sensor vorbeibewegt, wobei der erste Transportmechanismus in seinem zweiten Zustand und das Haltemittel in seinem ersten Zustand zusammenwirken, um eine Zugspannung auf den Träger (8) auszuüben.

2. Vorrichtung nach Anspruch 1, bei der die Einführöffnung (6), der erste Transportmechanismus (3), der Druckmechanismus (4) und der Sensor (52) in dieser Reihenfolge entlang dem Transportweg (9) angeordnet sind.

3. Vorrichtung nach Anspruch 1 oder 2, bei der der Schaltmechanismus (21, 26, 27) so ausgeführt ist, dass er das Haltemittel (51; 7) in den ersten Zustand schaltet, wenn sich der erste Transportmechanismus (3) im zweiten Zustand befindet und den Träger zum Bedrucken am Druckmechanismus vorbeibewegt.

4. Vorrichtung nach einem der vorigen Ansprüche, bei der der Sensor (52) ein Magnetlesekopf mit der Fähigkeit ist, die mit Magnettinte aufgedruckten Informationen zu lesen.

5. Vorrichtung nach einem der vorigen Ansprüche, bei der der Transportweg (9) im Wesentlichen gerade ist.

6. Vorrichtung nach einem der vorigen Ansprüche, bei der das Haltemittel eine Andruckwalze (51) aufweist, die zwischen einer ersten und einer zweiten Position entsprechend dem ersten bzw. zweiten Zustand beweglich ist, wobei die Andruckwalze in ihrer ersten Position den Träger gegen den Sensor (52) presst und eine Schleppkraft auf den Träger (8) ausübt, während der erste Transportmechanismus den Träger bewegt.

7. Vorrichtung nach einem der Ansprüche 1 bis 5, bei der das Haltemittel eine Gleitandruckeinrichtung aufweist, die zwischen einer ersten und einer zweiten Position entsprechend dem ersten bzw. zweiten Zustand beweglich ist, wobei die Gleitandruckeinrichtung in ihrer ersten Position den Träger gegen den Sensor (52) presst und eine Zugspannung aufbringt, indem die Oberfläche des Trägers gezogen wird, während der erste Transportmechanismus den Träger bewegt.

8. Vorrichtung nach einem der Ansprüche 1 bis 4, bei der das Haltemittel (7) ein Paar Walzen (71, 72) aufweist, die relativ zum Sensor (52) an einer Stelle des Transportweges (9) gegenüber der des ersten Transportmechanismus angeordnet sind und zwischen einer ersten und einer zweiten Position entsprechend dem ersten bzw. zweiten Zustand beweglich sind, wobei die Walzen in ihrer ersten Position eine Schleppkraft auf den Träger (8) ausüben, um ihn mit der Zugspannung zu beaufschlagen und gegen den Sensor (52) zu ziehen, während der erste Transportmechanismus den Träger bewegt.

9. Vorrichtung nach einem der Ansprüche 1 bis 4, bei der der Zugspannungsmechanismus (7) einen zweiten Transportmechanismus (71, 72) aufweist, der relativ zum Sensor (52) an einer Stelle des Transportweges (9) gegenüber der des ersten Transportmechanismus angeordnet ist und so konfiguriert ist, dass er im ersten Zustand eine Bewegungskraft auf den Träger ausübt, die sich von der vom ersten Transportmechanismus (3) auf den Träger ausgeübten Bewegungskraft unterscheidet, so dass die Zugspannung aufgebracht und der Träger gegen den Sensor (52) gezogen wird.

10. Vorrichtung nach einem der vorigen Ansprüche, bei der der Schaltmechanismus ein Selbsthalte-Magnetventil (26, 27) aufweist, das in der Lage ist, sich selbst in jeder der zwei den beiden Zuständen des Zugspannungsmechanismus (51; 7) entsprechenden Positionen zu halten.

11. Verfahren zum Lesen von auf einer ersten Oberfläche eines Trägers (8) aufgezeichneten Informationen und zum Drucken auf diesem Träger, wobei das Verfahren aufweist:
(a) Einführen eines Trägers (8) in eine Öffnung (6) eines Transportweges (9);
(b) Erkennen des Vorhandenseins des in Schritt (a) eingeführten Trägers (8) und, als Reaktion darauf, Bewegen des Trägers in Vorwärtsrichtung entlang dem Transportweg an einem Druckmechanismus (4) und einem Lesemechanismus vorbei, der einen Sensor (52) zum Erfassen und Lesen der auf dem Träger (8) aufgedruckten Informationen aufweist;
(c) Anhalten der Bewegung des Trägers (8), wenn dieser eine gegebene Position relativ zum Sensor (52) erreicht hat;
(d) Ineingriffbringen des Trägers mit einem Haltemittel (51; 7) und Bewegen des Trägers entlang dem Transportweg in zur Vorwärtsrichtung entgegengesetzter Rückwärtsrichtung, wobei das Haltemittel und der Transportmechanismus zusammenwirken, um eine Zugspannung auf den Träger auszuüben und die erste Oberfläche des Trägers gegen den Sensor zu pressen, während der Träger am Sensor vorbeibewegt wird;
(e) Lesen der Informationen, während der Träger in Rückwärtsrichtung am Sensor (52) vorbeibewegt wird;
(f) Bedrucken des Trägers, während dieser in Rückwärtsrichtung am Druckmechanismus (4) vorbeibewegt wird; und
(g) Ausgeben des Trägers durch die Öffnung (6).

12. Verfahren nach Anspruch 11, ferner einen vorbereitenden Schritt vor Schritt (a) aufweisend, in dem bestimmt wird, ob das Haltemittel in Eingriff steht, und falls ja, das Haltemittel außer Eingriff gebracht wird.

13. Verfahren nach Anspruch 11 oder 12, bei dem in Schritt (e) Hintergrundrauschen aus einem oder mehreren vom Sensor erhaltenen Signalen abgeleitet und das Hintergrundrauschen zur Unterdrückung von Rauscheffekten in anderen vom Sensor als Reaktion auf die auf dem Träger aufgezeichneten Informationen erzeugten Signalen verwendet wird.

14. Verfahren nach einem der Ansprüche 11 bis 13, bei dem Schritt (f) das Empfangen eines die Gültigkeit der auf dem Medium aufgezeichneten Informationen repräsentierenden Signals und als Reaktion darauf das Aufdrucken von Informationen auf eine zweite Oberfläche des Trägers gegenüber der ersten Oberfläche aufweist.

## Revendications

1. Dispositif d'impression pour imprimer sur un support et lire les informations enregistrées sur une première surface du support, comprenant :
un chemin (9) de transport possédant une fente d'insertion (6) pour recevoir un support (8),
un mécanisme (4) d'impression destiné à imprimer sur le support (8),
un mécanisme (5) de lecture comprenant un capteur (52) destiné à détecter et à lire les informations enregistrées sur le support (8),
un premier mécanisme (3) de transport ayant un premier et un deuxième états et étant adapté, dans le premier état, pour appliquer une force motrice au support (8) afin de le déplacer dans un premier sens depuis la fente d'insertion vers et au-delà du mécanisme (5) de lecture et du mécanisme (4) d'impression, et, dans le deuxième état, pour appliquer une force motrice au support (8) afin de le déplacer dans un deuxième sens opposé au premier sens,
un moyen de retenue (51 ; 7) pouvant être commuté entre un premier état permettant de retenir le support contre le capteur (52) et un deuxième état dans lequel le moyen de retenue est dégagé du support, et
un mécanisme (21, 26, 27) de commutation destiné à commuter le moyen de retenue entre les premier et deuxième états,
**caractérisé en ce que**
la fente d'insertion (6) forme également une fente de sortie pour évacuer le support après qu'il a été traité dans le dispositif, et
le mécanisme (21, 26, 27) de commutation est adapté pour commuter le moyen de retenue dans le deuxième état quand le premier mécanisme de transport est dans le premier état, et dans le premier état quand le premier mécanisme de transport est dans le deuxième état et déplace le support au-delà du capteur, le premier mécanisme de transport dans son deuxième état et le moyen de retenue dans son premier état coopérant pour appliquer une tension au support (8).

2. Dispositif selon la revendication 1, dans lequel la fente d'insertion (6), le premier mécanisme (3) de transport, le mécanisme (4) d'impression et le capteur (52) sont disposés dans cet ordre le long du chemin (9) de transport.

3. Dispositif selon la revendication 1 ou 2, dans lequel le mécanisme (21, 26, 27) de commutation est adapté pour commuter le moyen de retenue (51 ; 7) dans le premier état quand le premier mécanisme (3) de transport est dans son deuxième état et déplace le support au-delà du mécanisme d'impression pour l'impression.

4. Dispositif selon l'une quelconque des revendications précédentes, dans lequel le capteur (52) est une tête magnétique de lecture capable de lire les informations imprimées avec une encre magnétique.

5. Dispositif selon l'une quelconque des revendications précédentes, dans lequel le chemin (9) de transport est essentiellement droit.

6. Dispositif selon l'une quelconque des revendications précédentes, dans lequel le moyen de retenue comprend un rouleau presseur (51) pouvant être déplacé entre une première et une deuxième positions correspondant respectivement aux premier et deuxième états, le rouleau presseur étant adapté dans sa première position pour presser le support contre le capteur (52) et pour appliquer une force de traînée au support (8) lorsque le premier mécanisme de transport déplace le support.

7. Dispositif selon l'une quelconque des revendications 1 à 5, dans lequel le moyen de retenue comprend un presseur coulissant pouvant être déplacé entre une première et une deuxième positions correspondant respectivement aux premier et deuxième états, le presseur coulissant étant adapté dans sa première position pour presser le support contre le capteur (52) et pour appliquer la tension par glissement sur une surface du support lorsque le premier mécanisme de transport déplace le support.

8. Dispositif selon l'une quelconque des revendications 1 à 4, dans lequel le moyen de retenue (7) comprend une paire de rouleaux (71, 72) disposée dans une position du chemin (9) de transport opposée à celle du premier mécanisme de transport par rapport au capteur (52) et pouvant être déplacée entre une première et une deuxième positions correspondant respectivement aux premier et deuxième états, les rouleaux étant adaptés dans leur première position pour appliquer une force de traînée au support (8), ainsi que pour appliquer la tension et tirer le support contre le capteur (52) lorsque le premier mécanisme de transport déplace le support.

9. Dispositif selon l'une quelconque des revendications 1 à 4, dans lequel le mécanisme (7) de tension comprend un deuxième mécanisme (71, 72) de transport disposé dans une position du chemin (9) de transport opposée à celle du premier mécanisme de transport par rapport au capteur (52) et configuré lorsqu'il est dans le premier état pour appliquer une force motrice au support qui diffère de la force motrice appliquée au support par le premier mécanisme (3) de transport, ainsi que pour appliquer la tension et tirer le support contre le capteur (52).

10. Dispositif selon l'une quelconque des revendications précédentes, dans lequel le mécanisme de commutation comprend un électro-aimant (26, 27) de maintien capable de se verrouiller automatiquement dans chacune des deux positions correspondant aux deux états du mécanisme (51 ; 7) de tension.

11. Procédé pour lire les informations enregistrées sur une première surface d'un support (8) et pour imprimer sur le support, le procédé comprenant :
(a) l'insertion d'un support (8) dans une fente (6) d'un chemin (9) de transport,
(b) la détection de la présence du support (8) inséré à l'étape (a) et, en réponse à cela, le déplacement du support dans un sens avant le long du chemin de transport au-delà d'un mécanisme (4) d'impression et d'un mécanisme de lecture comprenant un capteur (52) destiné à détecter et à lire les informations enregistrées sur le support (8),
(c) l'arrêt du mouvement du support (8) quand celui-ci atteint une position donnée par rapport au capteur (52),
(d) la mise en prise du support avec le moyen de retenue (51 ; 7) et le déplacement du support le long du chemin de transport en sens inverse, opposé à la direction avant, dans lequel le moyen de retenue et le mécanisme de transport coopèrent pour appliquer une tension au support et pour pousser la première surface du support contre le capteur lorsque le support est déplacé au-delà du capteur,
(e) la lecture des informations lorsque le support est déplacé dans le sens inverse au-delà du capteur (52),
(f) l'impression sur le support lorsque le support est déplacé dans le sens inverse au-delà du mécanisme (4) d'impression, et
(g) l'évacuation du support par la fente (6).

12. Procédé selon la revendication 11, comprenant en outre une étape préparatoire avant l'étape (a) pour déterminer si le moyen de retenue est en prise et, dans l'affirmative, obliger le moyen de retenue à se dégager.

13. Procédé selon la revendication 11 ou 12, dans lequel l'étape (e) dérive un bruit de fond d'un ou plusieurs signaux reçus depuis le capteur et utilise le bruit de fond pour annuler les effets du bruit des autres signaux produits par le capteur en réponse aux informations enregistrées sur le support.

14. Procédé selon l'une quelconque des revendications 11 à 13, dans lequel l'étape (f) comprend la réception d'un signal représentant une validation des informations enregistrées sur le support et, en réponse à cela, l'impression des informations sur une deuxième surface du support opposée à la première surface.
